# EUROPEAN PATENT APPLICATION

(11) **EP 1 775 894 A1**
(43) Date of publication of application: **18.04.2007**
(21) Application number: 06019297.8
(22) Date of filing: 15.09.2006
(51) Int. Cl.: H04L 12/56

(54) **System and method for negotiating stack link speed in a stackable ethernet switch system**

(30) Priority: 11.10.2005 US 725449 P; 08.09.2006 US 530099
(71) Applicant: Alcatel Lucent, 75008 Paris (FR)
(72) Inventor: Subash, Bhora, CA 91377 Oak Park (US); Vincent, Margret, CA 91377 Oak Park (US)
(74) Representative: Schäfer, Wolfgang

(57) **Abstract**

A system and method for negotiating speed of a stack link disposed between a stack port of a first stack switch element (SSE) and a stack port of a second SSE, wherein the first and second SSEs are immediate neighbors in a stackable Ethernet switch (SES). In one embodiment, appropriate logic and/or processing structures are provided with respective SSEs for automatically negotiating the stack link's speed during initialization of the SES, whereby the stack link's speed may be increased to a select bandwidth rate greater than a default rate upon determining that the stack ports of the first and second SSE are capable of supporting the select bandwidth rate.

## Description

### BACKGROUND OF THE INVENTION

### Technical Field of the Invention

The present invention generally relates to communications networks. More particularly, and not by way of any limitation, the present invention is directed to a system and method for negotiating speed of a stack link in a stackable Ethernet switch.

### Description of Related Art

In data communication networks based on the Ethernet technology, packet switches, including multi-layer switches and routers, are used to operatively couple many nodes for purposes of communicating packets of information therebetween. Switches that are made to stand alone without relying on a shared backplane have a plurality of ports and an internal switching fabric for directing inbound packets received at an ingress port to a suitable egress port. In some implementations in the art, the switching capacity is enhanced by linking a plurality of stand-alone switches by operatively linking selected ports (i.e., stack ports) of the switches together so as to create a stackable switch system operable as a single switching entity. Such systems, sometimes called stack switch systems, are often employed together at a customer's premises, e.g., an enterprise.

In a typical implementation, a plurality of stack switches are operatively interconnected via a pair of designated stack ports present on each switch, also referred to as an element. The system of stack switches is generally coupled in series via a stack link, and the topology of the system is generally characterized by a closed loop called a ring or an open strand of switches referred to herein as a chain. Each of the stack switches is adapted to perform switching between its own data ports as well as the data ports of other stack switches by transmitting packets via the stack ports using stack switch identifiers that facilitate the efficient transmission and switching of these packets to the appropriate stack switch element.

Certain stacking architectures may involve stackable switch elements that can support dual stacking speeds, in addition to elements that have the capability to support only one speed. When mixing both types of switch elements, it becomes necessary that the elements are properly configured in order to ensure that a condition known as "stack split" does not occur. Moreover, proper configuration is indispensable in maximizing the stack link speed on a segment-by-segment basis in a stacking system.

### SUMMARY OF THE INVENTION

Embodiments of the present disclosure are directed to a system, method and associated computer readable media for negotiating speed of a stack link disposed between a stack port of a first stack switch element (SSE) and a stack port of a second SSE, wherein the first and second SSEs are immediate neighbors in a stackable Ethernet switch (SES). In one embodiment, appropriate logic and/or processing structures are provided with respective SSEs for automatically negotiating the stack link's speed during initialization of the SES, whereby the stack link's speed may be increased to a select bandwidth rate greater than a default rate upon determining that the stack ports of the first and second SSE are capable of supporting the select bandwidth rate.

One embodiment is directed to a method for negotiating speed of a stack link disposed between a stack port of a first SSE and a stack port of a second SSE that are immediate neighbors in an SES having at least two SSEs. The claimed method comprises: detecting a link up condition associated with the stack link by the stack port of the first SSE; upon determining that the stack port of the first SSE is operable at a select bandwidth rate, advertising the select bandwidth rate to the stack port of the second SSE; upon determining that the stack port of the second SSE is operable at the select bandwidth rate, generating an acknowledgment to the stack port of the first SSE; and responsive to the acknowledgement, the stack ports of the first SSE and the second SSE transitioning into an operational mode compatible with the select bandwidth rate for transmitting traffic on the stack link disposed therebetween.

Another embodiment is directed to a system for negotiating speed of a stack link disposed between a stack port of a first SSE and a stack port of a second SSE that are immediate neighbors in an SES having at least two SSEs. The claimed system comprises: means for determining that the stack port of the first SSE is operable at a select bandwidth rate; means for advertising the select bandwidth rate to the stack port of the second SSE; means for determining that the stack port of the second SSE is operable at the select bandwidth rate and for generating an acknowledgment to the stack port of the first SSE; and means responsive to the acknowledgment for transitioning the stack ports of the first SSE and the second SSE, respectively, into an operational mode compatible with the select bandwidth rate for transmitting traffic on the stack link disposed therebetween. It should be apparent that the various means disclosed herein may be embodied in hardware, software, or firmware, or in any combination thereof.

A still further embodiment is directed to a stackable Ethernet switch or SES, comprising: a first SSE having a stack port; a second SSE having a stack port, the first and second SSEs being immediate neighbors such that the first and second SSEs are coupled via a stack link disposed between the stack ports; and means for automatically negotiating the stack link's speed during initialization of the SES, whereby the stack link's speed may be increased to a select bandwidth rate greater than a default rate upon determining that the stack ports of the first and second SSE are capable of supporting the select bandwidth rate.

In yet another embodiment, the present disclosure is directed to computer readable medium having a set of instructions which, when executed in a processor environment associated with an SES, perform the following:
determining that a stack port of a first SSE of the SES is operable at a select bandwidth rate; advertising the select bandwidth rate to a stack port of a second SSE of the SES, the first and second SSEs being immediate neighbors such that the first and second SSEs are coupled via a stack link disposed between the stack ports; determining that the stack port of the second SSE is operable at the select bandwidth rate and generating an acknowledgment to the stack port of the first SSE; and transitioning, responsive to the acknowledgment, the stack ports of the first SSE and the second SSE, respectively, into an operational mode compatible with the select bandwidth rate for transmitting traffic on the stack link disposed therebetween.

### BRIEF DESCRIPTION OF THE DRAWINGS

A more complete understanding of the present invention may be had by reference to the following Detailed Description when taken in conjunction with the accompanying drawings wherein:
FIG. 1A is a generalized Ethernet environment having a stackable Ethernet switch (SES);
FIG. 1B is an exemplary SES having stack elements with dual-speed capability wherein an embodiment of the present invention may be implemented;
FIG. 2 is a block diagram of an Ethernet slot/element operable to negotiate stack link speed in accordance with one embodiment;
FIG. 3 is a flowchart relating to a scheme for negotiating stack link speed between two stack elements in an SES according to one embodiment;
FIG. 4 is a state flow diagram relating to a single-speed stack element/port according to one embodiment of the disclosure; and
FIGS. 5A-5D depict various state flow diagrams relating to a dual-speed stack element/port for negotiating the speed of a stack link associated therewith according to one embodiment of the disclosure.

### DETAILED DESCRIPTION OF THE DRAWINGS

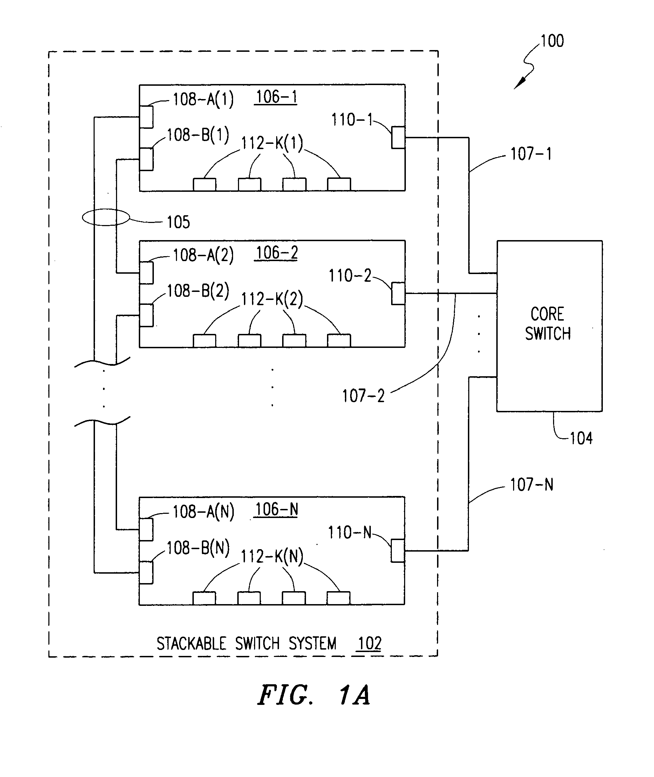

Embodiments of the invention will now be described with reference to various examples of how the embodiments can best be made and used. Like reference numerals are used throughout the description and several views of the drawings to indicate like or corresponding parts, wherein the various elements are not necessarily drawn to scale. Referring now to FIG. 1A in particular, shown therein is a generalized exemplary Ethernet environment 100 having a stackable Ethernet switch (SES) 102 wherein an embodiment of the present invention may be implemented. At the outset, it should be recognized that Ethernet environment 100 is illustrative of any known or heretofore unknown Ethernet implementations where one or more Ethernet nodes having the well-known Layer 2 or Layer 2/3 functionality, or any other higher Layer functionality in accordance with the Open Systems Interconnect (OSI) model are interconnected together in a communications network. Accordingly, for instance, the Ethernet environment 100 may be a local area network (LAN) operating as an enterprise-level network, customer premises network, et cetera. By way of further illustration, the network environment 100 may be embodied as a dual- or multi-home application. In still further embodiments, the Ethernet environment 100 may comprise a metro Ethernet or an access network implementation.

A plurality of Ethernet switch elements 106-1 through 106-N (also variously referred to hereinafter as "slots", "stack switches", or "stack switch elements") form SES 102 that operates as a scalable network node coupled to a core switch 104 of the Ethernet environment 100. In terms of configuration, slots 106-1 to 106-N may be organized as a "stack" having any suitable topology such as, e.g., a chain topology or a ring topology, interconnected with a stacking link 105. Each slot or switch element may support a plurality of Ethernet ports to facilitate network connectivity among the slots, with other network nodes and/or devices, as well as core switch 104, which can be another Ethernet switch in one implementation. Accordingly, for purposes of the present disclosure, the Ethernet ports of a stack switch element may be grouped into three categories: (i) one or more core switch ("CS") ports operable to couple each stack switch element to.core switch 104 via a respective core switch connection; (ii) one or more stack ports operable to effectuate stacking link 105 that interconnects the plural switch elements 106-1 to 106-N via a plurality of inter-slot stack link segments; and (iii) one or more ports operable to support connectivity to other network elements, nodes, and/or devices. As illustrated in FIG. 1A, reference numerals 110-1 to 110-N refer to the CS ports corresponding to the N switch elements, respectively, whereby the plural switch elements 106-1 to 106-N are coupled to core switch 104 via core switch connections 107-1 to 107-N. A pair of stack ports are illustrated with respect to each switch element, e.g., ports 108-A(1) and 108-B(1) for switch element 106-1, ports 108-A(2) and 108-B(2) for switch element 106-2, and so on, to couple to respective stacking links that may be implemented in a twisted-pair cable or fiber optic cable arrangement. As will be set forth in detail hereinbelow, stack ports of a switch element may be provided with multi-speed capability, i.e., the ability to operate at variable bandwidth rates for data transmission and/or reception, which gives rise to a situation where an SES may include switch elements that have single-speed stack ports as well as switch elements that have dual- or multi-speed stack ports.

Further, each switch element is also provided with a number of network ports, e.g., ports 112-K(1) for switch element 106-1, ports 112-K(2) for switch element 106-2, and so on. Those skilled in the art will recognize that although each switch element is exemplified with the same number of ports, it need not be the case in any particular implementation. Additionally, stack ports of a single switch element may have different capabilities, i.e., one stack port being a single-speed port whereas the other stack port being a dual-speed port.

As alluded to previously, in a preferred embodiment, stack switch elements 106-1 to 106-N are operable as multi-layer switches adapted to perform switching and routing operations with protocol data units (PDUs), preferably frames and packets, at Layer 2 (Data Link Layer) and Layer 3 (Network Layer) as defined by the OSI reference model, although they may also perform Layer 4-7 switching operations. Further, each switch element may generally be capable of functioning as a stand-alone network bridge, switch, or router. Where provided with an integrated stack manager protocol (ISMP), however, stack switch elements 106-1 to 106-N cooperate to emulate a single switching node more powerful than the mere aggregation of the individual switch elements in stand-alone operation. The resulting SES node 102 is preferably adapted to provide scalable networking capability with enhanced fault tolerance and user convenience. In particular, SES 102 can dynamically scale to incorporate additional stack switch elements, detect non-operational stack switches and stack links, dynamically route around -- and in some cases throughthe non-operational stack switches, and automatically configure the stack switch elements to produce a non-redundant identification scheme to facilitate inter-stack switch forwarding operations.

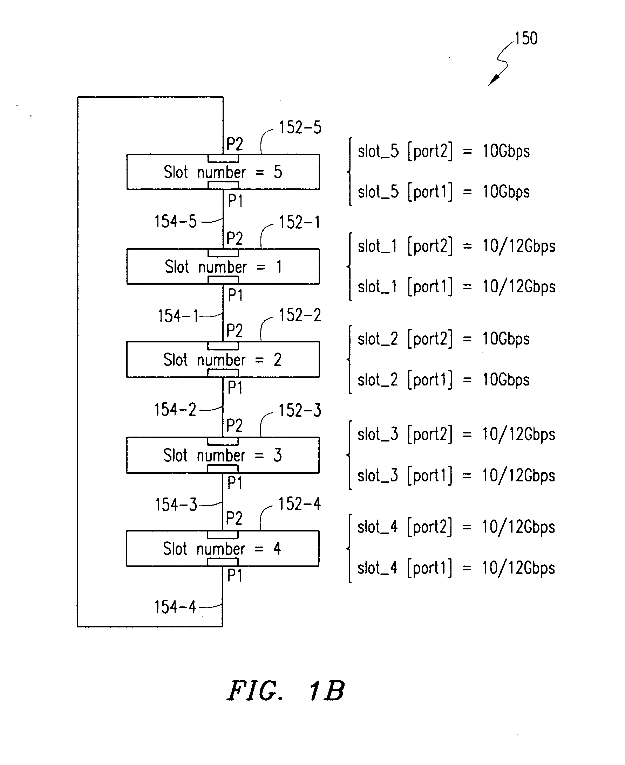

FIG. 1B depicts a more concrete exemplary SES 150 having stack elements with dual-speed capability wherein an embodiment of the present invention may be implemented. In particular, five slots are illustrated: Slot 1 152-1 through Slot 5 152-5, wherein two slots are provided with single-speed stack ports and three slots are provided with dual-speed stack ports. Each slot is coupled to its immediate neighbor in one direction via a stack link disposed therebetween and to its immediate neighbor in the other direction via a stack link disposed therebetween. In the five-slot SES 150 shown, five stack links are accordingly formed: stack link 154-1 disposed between Slot 1 and Slot 2, stack link 154-2 disposed between Slot 2 and Slot 3, stack link 154-3 disposed between Slot 3 and Slot 4, stack link 154-4 disposed between Slot 4 and Slot 5, and stack link 154-5 disposed between Slot 5 and Slot 1. Depending on the stack port capabilities, a particular link between a pair of stack switch elements (SSEs) may be driven at a higher speed, whereby transmission bandwidth may be maximized in SES 150 on a segment-by-segment basis.

By way of illustration, Slot 2 and Slot 5 are each provided with a pair of single-speed stack ports, P1 and P2, e.g., operable at 10 Gigabits per second (Gbps), whereas Slots 1, Slot 3, and Slot 4 are each provided with a pair of dual-speed stack ports, P1 and P2, e.g., operable at 10Gbps or 12Gbps. Accordingly, only stack link 154-3 can be operated at the higher bandwidth rate of 12Gbps since P1 of Slot/SSE 3 152-3 and P2 of Slot/SSE 4 152-4 are capable of supporting higher bandwidth rates. On the other hand, the remaining four stack links can be operated at the lower rate of 10 Gbps. As will be described in detail below, appropriate logic and/or processing structures are provided with each SSE for negotiating applicable stack link speeds for the two stack links it is associated with during the initial configuration of a mixed-element stackable switch such as SES 150.

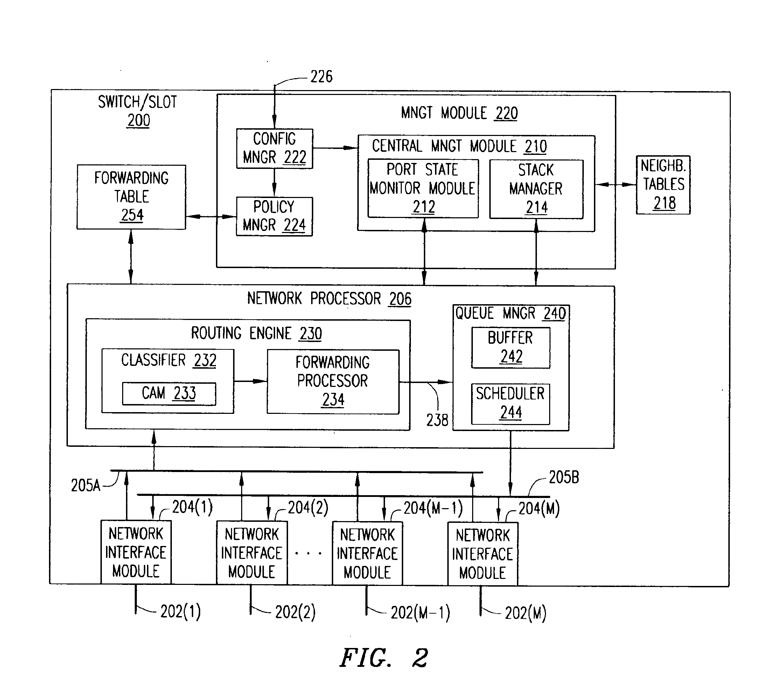

FIG. 2 depicts a block diagram of an Ethernet slot/SSE 200 operable to negotiate stack link speed in accordance with one embodiment. One skilled in the art will recognize that SSE 200 is exemplary of the slots/SSEs described above in reference to the SES embodiments 102 and 150. SSE 200 preferably comprises one or more network interface modules (NIMs) 204(i), one or more switching controllers (i.e., network processors) 206, and a management module 220, all of which preferably cooperate to receive ingress data traffic and transmit egress data traffic via a plurality of Ethernet ports 202(i), i = 1, 2, 3,...., M. For purposes of this embodiment, each of the plurality of the ports 202(i) may be treated as a duplex port adapted to receive ingress data and transmit egress data. Furthermore, ports 202(i) are illustrative of the three types of Ethernet ports, including the stack ports as well as CS ports, described hereinabove with respect to FIG. 1. Accordingly, it is envisaged that a particular port 202(i) may transport both user data traffic as well as control management traffic if that port is operable as a stack port, and in some implementations, SSE 200 may support more than two stack ports.

NIM elements 204(i) preferably include one or more physical layer interfaces and media access control (MAC) interfaces adapted to exchange PDUs, e.g., Ethernet frames and IP packets, via suitable wired or wireless network communications links (not shown). The NIMs associated with the ports operable as stack ports are, for example, standard Ethernet NIMs that are adapted to exchange PDUs, conventional data traffic with various compatible nodes, as well as inter-stack communications to other stack switches depending on the stack configuration mode. The ingress PDUs are conveyed from the plurality of NIMs to network processor/controller 206 by means of one or more ingress data buses 205A. Similarly, the egress PDUs are transmitted from controller 206 to the plurality of NIMs via one or more egress data buses 205B.

In one implementation, management module 220 generally comprises a policy manager 224 for retaining and implementing traffic policies. The policies implemented by policy manager 224 are preferably based in part on Layer-2 and/or Layer-3 addressing information derived from source learning operations, route information received from other routing devices, and filtering rules uploaded by the network administrator via a configuration manager 222 using, for example, Simple Network Management Protocol (SNMP) messages 226. The traffic policies derived from source learning, other network nodes, and the administrator are made available to a routing engine 230 executed by network processor 206, and are collectively represented by a forwarding table 254.

In addition, management module 220 includes a control module 210 for implementing stack port speed management and auto speed negotiation functionality described in more detail below. Control module 210 preferably comprises a port state monitor module 212 that is adapted to monitor the operational state of the stack ports using control traffic signals, e.g., Keep-Alive signals, and identify the presence of adjacent stack switches coupled to the stack ports of the switch element 200. Control module 210 in a preferred embodiment may also include a stack protocol manager 214 adapted to participate in the elections that determine each stack switch's management responsibilities, process supervision messages used to monitor the status of the other switch elements, and if necessary, serve as a primary master switch (PMS) or a secondary master switch (SMS) whose responsibilities may include assigning unique element identifiers to one or more stack switches and assign processor identifiers to the network processors thereof. Additionally, stack manager 214 is adapted to determine the stack switch topology and process topology-related messages exchanged between the stack switch elements of an SES. In particular, stack manager 214 transmits SES topology requests, transmits known SES topology information to other stack switches, and maintains one or more local topology tables. In some embodiments, the functionality of port state monitor 212 and stack manager 214 may also include detecting the loss of an element, insertion of an additional element (causing a trap or exception to be generated), removal of an element from the stack, and determining the internal operational state of the control module.

Also, stack manager 214 in a preferred embodiment maintains and updates one or more stack switch neighbor tables 218, preferably one associated with each of the stack ports. A neighbor table 218 is a listing of those stack switches reachable through the associated stack port. In one implementation, the neighbor stack switches are recited in sequential order with the switch element immediately adjacent to the port listed first. As described previously, each element may be provided with two stack ports. Accordingly, each stack port of switch element 200 keeps a separate neighbor table 218 which lists all neighboring stack switches reachable through that stack port. As a result, if the topology of SES 102 is a ring configuration, both neighbor tables 218 have the same list of neighboring stack switches but in reverse order.

Continuing to refer to FIG. 2, network processor 206 is capable of, but not limited to, Layer 2 and Layer 3 switching operations as defined in the OSI reference model. Examples of Layer 2 protocols for operably coupling ports 202(1) to 202(M) to respective wired and/or wireless communications links include the Institute of Electrical and Electronics Engineers (IEEE) 802.3 and IEEE 802.11 standards. Likewise, examples of Layer 3 protocols include Internet Protocol (IP) version 4 defined in Internet Engineering Task Force (IETF) Request for Comment (RFC) 791 and IP version 6 defined in IETF RFC 1883.

Network processor 206 preferably comprises a routing engine 230 and a queue manager 240. In one exemplary implementation, routing engine 230 comprises a classifier 232 that receives ingress PDUs from data bus 205A, inspects one or more fields of the PDUs, classifies the PDUs into one of a plurality of flows using a content addressable memory (CAM) 233, and retrieves forwarding information from forwarding table 254 stored in memory. The forwarding information retrieved from forwarding table 254 preferably includes, but is not limited to, a flow identifier used to specify those forwarding operations necessary to prepare the particular PDU for egress, where the flow identifier may include the next-hop address and class of service (CoS) or Quality of Service (QoS) provisions. A forwarding processor 234 receives the ingress PDUs with the associated forwarding information and executes one or more forwarding operations prior to transmission to the appropriate egress port or ports. The forwarding operations preferably include but are not limited to header transformation for re-encapsulating data, VLAN tag pushing for appending one or more VLAN tags to a PDU, VLAN tag popping for removing one or more VLAN tags from a PDU, QoS management for reserving network resources, billing and accounting for monitoring customer traffic, Multi-Protocol Label Switching (MPLS) management, selective filtering of PDUs, access control, higher-layer learning including Address Resolution Protocol (ARP) control, and so on.

After being processed by forwarding processor 234, the PDUs are passed to and stored in queue manager 240 until bandwidth is available to transmit the PDUs to the appropriate egress port. In particular, the egress PDUs are buffered in one or more priority queues in buffer 242 until they are transmitted by scheduler 244 to an egress port via data bus 205B. Additional details regarding an embodiment of SSE 200 may be found in the in the following commonly owned co-pending patent application: "STACK MANAGER PROTOCOL WITH AUTOMATIC SETUP MECHANISM," filed , Application No. : (Alcatel Docket No. 134196), in the name(s) of: Ignatius D. Santoso, Roberto Henrique Jacob Da Silva, Timothy Hicks and Vincent Magret; which is incorporated by reference hereinabove.

With particular reference to stack port speed management and auto speed negotiation functionality where dual-speed stack ports are involved, the responsible logic and processing structures of SSE 200 may preferably include appropriate hardware, software, and/or firmware associated with a particular dual- or multi-speed stack port 202(i) for automatically negotiating the speed of the stack link to which it is coupled during system initialization. In general, negotiating speed of a stack link disposed between a stack port of a first SSE and a stack port of a second SSE that are immediate neighbors in an SES involves the following functionality: detecting a link up condition associated with the stack link by the stack port of one of the SSEs, e.g., the first SSE; upon determining that the stack port of the first SSE is operable at a select bandwidth rate, advertising the select bandwidth rate to the stack port of the second SSE; upon determining that the stack port of the second SSE is operable at the select bandwidth rate, generating an acknowledgment to the stack port of the first SSE; and responsive to the acknowledgement, the stack ports of the first SSE and the second SSE transitioning into an operational mode compatible with the select bandwidth rate for transmitting and/or receiving traffic on the stack link disposed therebetween. As will be described below, a fail-safe auto speed negotiation protocol based on acknowledgment handshaking between any two SSEs is preferably introduced during initial system configuration for selecting applicable bandwidth rate therebetween in accordance with the generalized process flow set forth above.

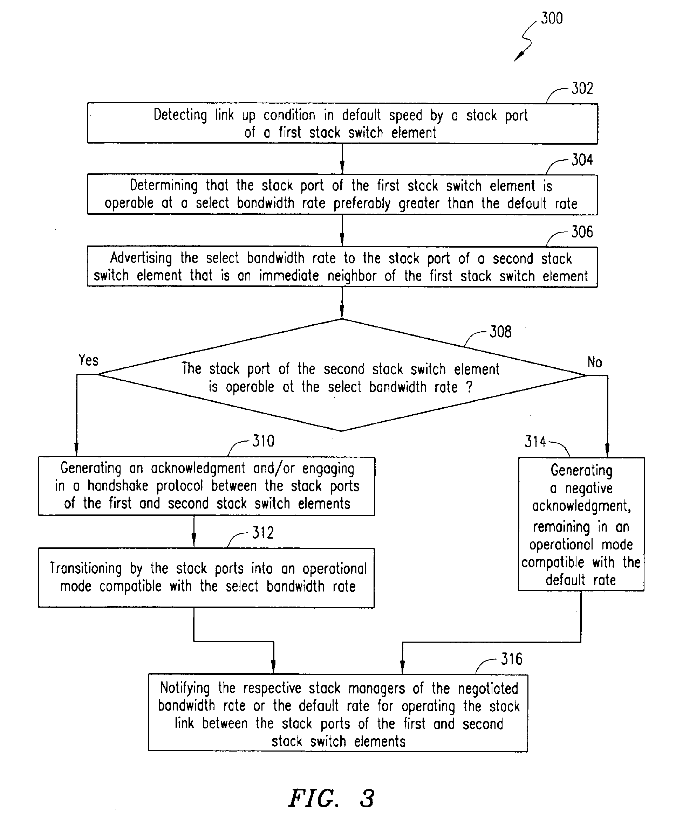

FIG. 3 is a flowchart relating to a scheme 300 for negotiating stack link speed between two stack elements in an SES according to one embodiment. Pursuant to initial configuration upon power-up, a stack link between two stack elements come up in a link up condition having a default speed. As alluded to before, one of the stack ports connected to the stack link detects the link up condition, whereupon the appropriate logic/processing functionality associated with the detecting stack port commences the auto speed negotiation process (block 302). While there is a mathematical probability that both stack ports may detect the link up condition simultaneously, this is not the case typically for all practical purposes, as the two hardware events are generally stochastic with respect to each other. In one embodiment, detection by a stack port having dual-speed capability may be pre-configured to have precedence, however. A determination is made by the detecting stack port's logic that it is operable at two or more bandwidth rates, including a select bandwidth rate that is preferably greater than the default rate (block 304). Upon identifying the select bandwidth rate, the detecting stack port advertises the select bandwidth rate information via appropriate control messaging to the adjacent stack port, i.e., the stack port of the second SSE to which it is coupled via the stack link (block 306). Responsive to the advertised bandwidth information, suitable logic/processing functionality associated with the stack port of the second SSE is operable to determine whether it is capable of operating at the advertised bandwidth rate (block 308). If so, an acknowledgment and/or timer-based handshake protocol is engaged between the stack ports of the first and second SSEs (block 310). Thereafter, the stack ports of the first and second SSEs are transitioned into a state that is indicative of an operational mode compatible with the select bandwidth rate (block 312). The respective stack managers of the two SSEs subsequently are notified of the negotiated bandwidth rate for operating the stack link connecting the two elements (block 316).

On the other hand, if it is determined that the stack port of the second SSE is not operable at the select bandwidth rate, a negative acknowledgment is generated to the stack port of the first SSE, whereupon both stack ports remain in a state that is indicative of an operational mode compatible with the default speed (block 314). Thereafter, the stack ports notify the default bandwidth condition to the respective stack managers in normal course (block 316).

Accordingly, in one implementation of the foregoing embodiment, although the stack links come up in a default speed (e.g., 10Gbps) on the stack elements, notification of link status to the stacking system including the respective stack managers may be delayed until the bandwidth negotiation process is complete. Successful negotiation between two stack elements (i.e., both stack ports can increase their speed to a select bandwidth rate, e.g., 12 Gbps) leads to a successful link up status, which is notified to the stacking system. On the other hand, failure to negotiate and/or a negotiation not leading to increased speed causes the stack ports to revert to the default speed, which is subsequently notified to the stack managers.

Those skilled in the art will recognize upon reference hereto that the foregoing protocol may be rendered in a robust implementation by utilizing timer mechanisms at various stages such that: (i) only a predetermined number of speed negotiation attempts (also referred to as speed toggling attempts) may be made before timing out; and (ii) timed handshaking between the two ends of a stack link will ensure that the ends, i.e., stack ports, move in a lock-step fashion before switching to a negotiated bandwidth condition. These processes may be exemplified by means of state flow diagrams as the stack ports (single-speed or dual-speed) transition through appropriate states to achieve coordinated switch over to a higher speed.

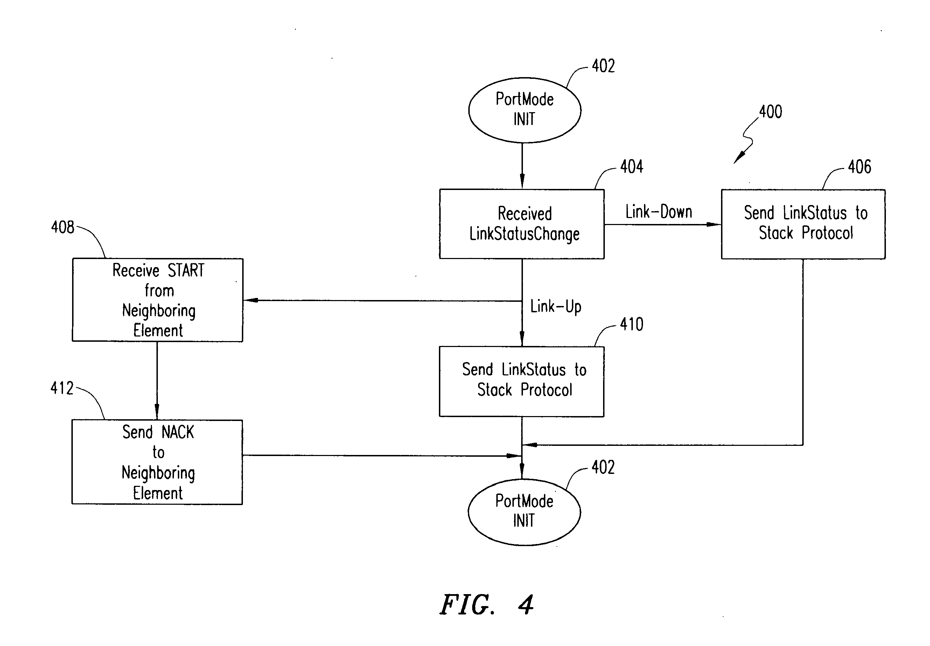

Referring now to FIG. 4, depicted therein is a state flow process 400 relating to a single-speed stack port according to one embodiment of the disclosure. As illustrated, the single-speed stack port is initially disposed in a PortMode INIT state 402. With respect to receiving a LinkStatusChange (block 404) from the stack link to which it is coupled, which can be a link down or a link up message, the single-speed stack port transitions into appropriate states accordingly. With a link down message, a LinkStatus message is forwarded to the stack protocol manager (block 406) and, subsequently, the single-speed stack port returns to PortMode INIT state (block 402). Upon a link up message, the stack port is also operable to transmit an appropriate LinkStatus message to the stack protocol (block 410). Further, when the single-speed stack port receives a START message from its neighboring element (block 408), it sends a negative acknowledgment or NACK to the neighbor (block 412) because it cannot capable of supporting a bandwidth other than the default speed. Thereafter, the single-speed stack port returns to PortMode INIT state (block 402) as before.

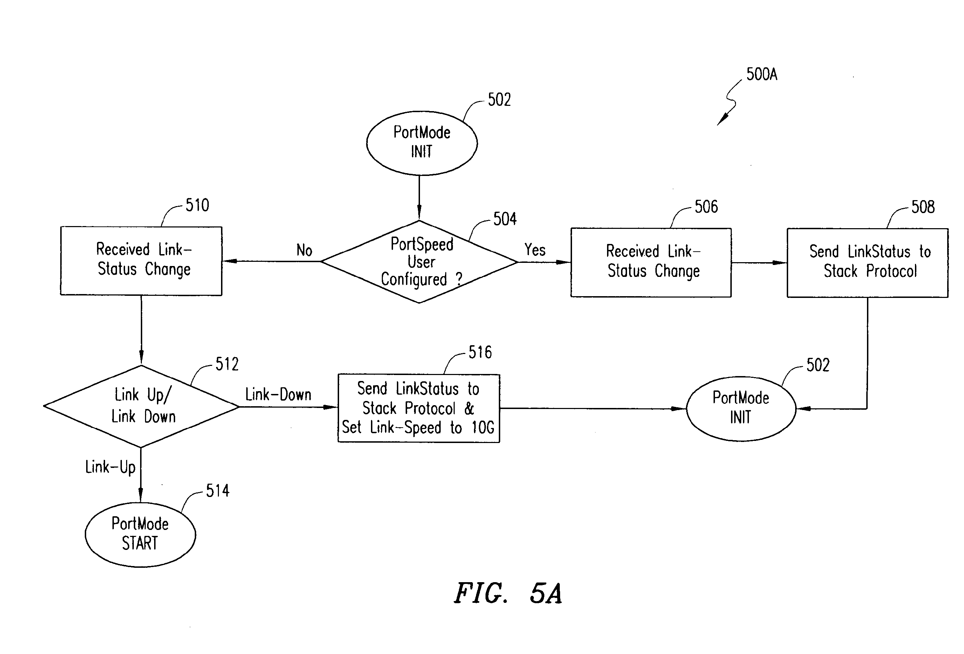

FIGS. 5A-5D depict various nested state flow processes relating to a dual-speed stack port for negotiating the speed of a stack link associated therewith according to one embodiment of the disclosure. State flow process 500A is representative of a first stage in the process that results in the dual-speed stack port transitioning into a PortMode START state 514 from initial PortMode INIT state 502. In one implementation, bandwidth of a dual-speed port may be configured by the user, e.g., on a manual basis. Accordingly, upon determining that the port speed has been configured (block 504), the dual-speed stack port is operable to receive a LinkStatusChange message from the stack link to which it is coupled. Responsive to receiving a suitable LinkStatusChange message, a Link Status message is forwarded to the stack protocol manager (block 508). Subsequently, the dual-speed stack port returns to PortMode INIT state (block 502).

If the dual-speed stack port receives a LinkStatusChange message (block 510) when it has not been configured by the user, another set of state transitions take place. Responsive to receiving a link down message as determined by decision block 512, the dual-speed stack port sends the LinkStatus to the stack protocol manager and sets the link speed to the default rate (e.g., 10Gbps) (block 516). Thereafter, the dual-speed stack port returns to PortMode INIT state (block 502). On the other hand, responsive to receiving a link up message, the dual-speed stack port transitions to PortMode START state (block 514).

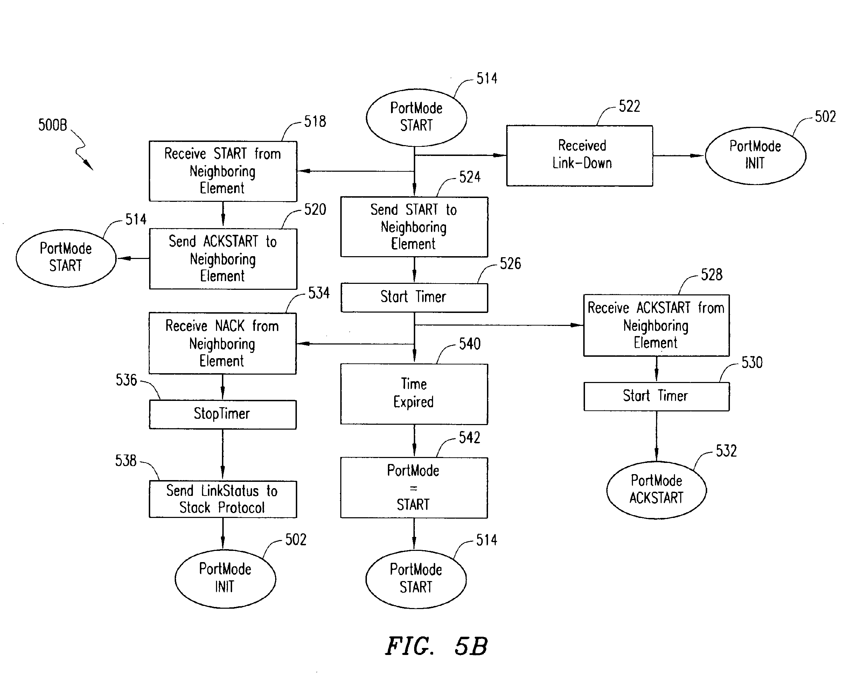

State flow process 500B depicted in FIG. 5B is representative of a second stage of the process that involves transitions with respect to PortMode START state (block 514). If a link down message is received from the stack link at this juncture, the dual-speed stack port is operable to return to PortMode INIT state (block 502). If a START message is received from the neighboring stack port (block 518), the dual-speed stack port is operable to respond by transmitting an acknowledgement or ACKSTART (block 520). Thereafter, the dual-speed stack port reverts to PortMode START until further events take place (block 514). In another transitional path, the dual-speed stack port is operable initiate a handshake process on its own from PortMode START state (block 502). When it sends a START message to the neighboring port (block 524), a timer mechanism is initiated (block 526), whereupon three flow paths become available. If a negative acknowledgment (NACK) is received from the neighbor (block 534), the timer is stopped (block 536) and a LinkStatus message is transmitted to the stack protocol manager (block 538). Thereafter, the dual-speed stack port reverts to PortMode INIT until further events take place (block 502). A second flow path from starting the timer involves determining that the timer has expired (i.e., timeout) (block 540) and PortMode has not changed, i.e., START (block 542), thereby maintaining the START state (block 514). In a third flow path, the dual-speed stack port is operable to receive a positive acknowledgement or ACKSTART from the neighbor (block 528), whereupon the timer is stopped (block 530) and the port is transitioned to a PortMode ACKSTART state (block 532).

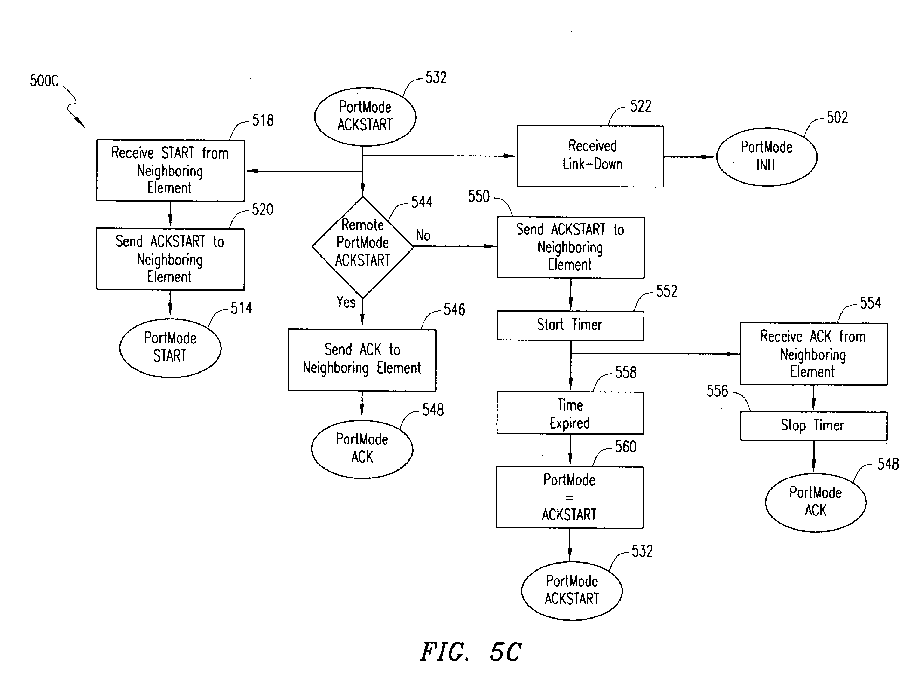

State flow process 500C depicted in FIG. 5C is representative of a third stage of the process that involves transitions with respect to PortMode ACKSTART state (block 532) wherein three alternative flow paths are exemplified. As before, if a link down message is received from the stack link at this juncture, the dual-speed stack port simply reverts to PortMode INIT state (block 502). Upon receiving a START message from the neighboring stack port, i.e., remote port, (block 518), the dual-speed stack port responds by transmitting an acknowledgement or ACKSTART (block 520), indicating that both the ports are capable of operating at a selected bandwidth rate. Thereafter, the dual-speed stack port reverts to PortMode START until further events take place (block 514).

Upon determination that the neighboring port is in PortMode ACKSTART state (block 544), the dual-speed stack port sends ACK messages to the neighbor (block 546), preferably with a waiting period of about 10-500 ms to propagate the last message. Thereafter, the dual-speed stack port transitions to a PortMode ACK state (block 548). If the remote port, i.e., neighboring port, is not in PortMode ACKSTART state (block 544), the dual-speed stack port sends an ACKSTART message to the neighbor (block 550) and starts a timer (block 552). If an ACK is received from the neighboring element (block 554), the timer is stopped (block 556) and the dual-speed stack port subsequently enters PortMode ACK state (block 548). Otherwise, upon expiration of the timer (block 558), PortMode is set to ACKSTART as illustrated in blocks 560 and 532.

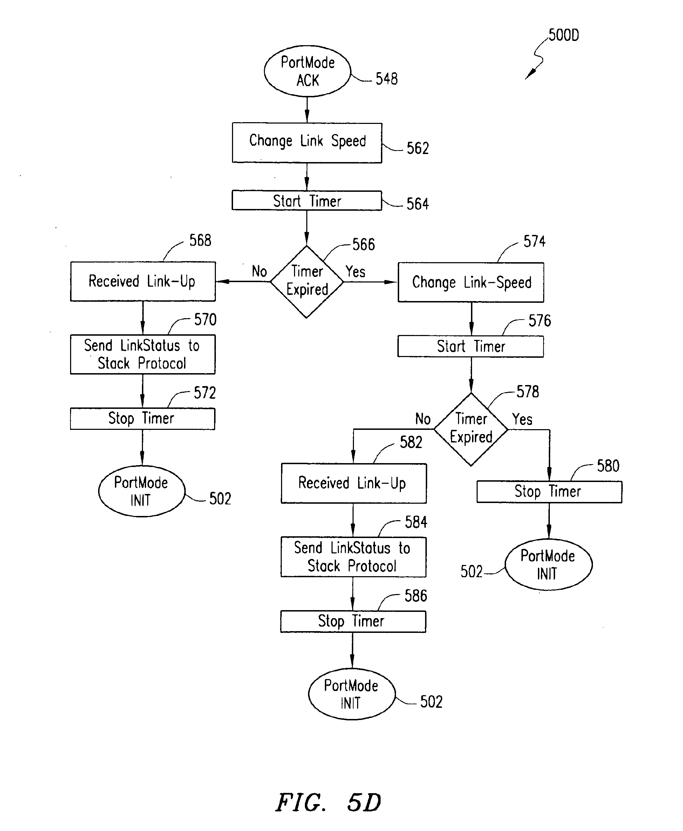

State flow process 500D depicted in FIG. 5D is representative of a fourth stage of the process that involves switching over to the negotiated bandwidth rate, wherein various transitions with respect to PortMode ACK state (block 548) are illustrated. First, the link speed is changed to the select bandwidth rate (preferably one that is greater than the default rate) (block 562). A timer mechanism is started thereafter with a predetermined expiration period (blocks 564 and 566). If the timer has not expired, upon receiving link up message from the stack link (block 568) (to ensure that the physical connection between the two neighboring elements has not been lost or otherwise compromised), a LinkStatus message is transmitted to the stack protocol manager (block 570). The timer is then stopped (block 572) and the dual-speed stack port is transitioned to PortMode INIT, ready to communicate with its neighbor at the negotiated bandwidth rate (block 502).

If the timer has expired, the link speed is changed to the default rate (e.g., 10 Gbps) (block 574), whereupon a second timing period is monitored (block 576). If the second timer also expires, it is stopped (blocks 578 and 580) and the dual-speed stack port reverts to PortMode INIT state (block 502), indicating that the stack link may have been lost or otherwise compromised. On the other hand, if the second timer has not expired (block 578) and pursuant to receiving a link up condition from the stack link (block 582), a LinkStatus message is communicated to the stack protocol manager (block 584). The timer is then stopped (block 586) and the dual-speed stack port is transitioned to PortMode INIT state (block 502), whereupon the stack port is operable to communicate with its neighbor at the default rate.

Based on the foregoing discussion it should be appreciated that embodiments of the present disclosure advantageously allow mixing of stack switch elements that support different speeds. With higher speed stack links being available, user equipment operating on such stack links can maximize their throughput. Further, since no human intervention is needed for manually configuring the speeds on individual elements, the probability of incorrectly configuring a particular element is reduced.

The following system, the following switch as well as the following features, separately or in any combination, may also constitute advantageous embodiments of the described or claimed invention:
- The claimed and/or described method, further comprising, upon said stack ports transitioning into an operational mode compatible with said select bandwidth rate, notifying said select bandwidth rate to stack managers of said first and second SSEs, respectively.
- A system for negotiating speed of a stack link disposed between a stack port of a first stack switch element (SSE) and a stack port of a second SSE, said first and second SSEs being immediate neighbors in a stackable Ethernet switch (SES) having at least two SSEs, said system comprising: means for determining that said stack port of said first SSE is operable at a select bandwidth rate; means for advertising said select bandwidth rate to said stack port of said second SSE; means for determining that said stack port of said second SSE is operable at said select bandwidth rate and for generating an acknowledgment to said stack port of said first SSE; and means responsive to said acknowledgment for transitioning said stack ports of said first SSE and said second SSE, respectively, into an operational mode compatible with said select bandwidth rate for transmitting traffic on said stack link disposed therebetween.
- The claimed and/or described system, wherein said select bandwidth rate is greater than a default speed associated with said stack link.
- The claimed and/or described system, further comprising means for generating a negative acknowledgement to said stack port of said first SSE if it is determined that said stack port of said second SSE is not operable at said select bandwidth rate.
- The claimed and/or described system, further comprising means responsive to said negative acknowledgment for transitioning said stack ports of said first and second SSEs, respectively, into an operational mode compatible with a default speed associated with said stack link.
- The claimed and/or described system, wherein said default speed is lower than said select bandwidth rate.
- The claimed and/or described system, wherein said select bandwidth rate comprises 12 Gigabits per second (Gbps) and said default speed comprises 10 Gbps.
- The claimed and/or described system, further comprising means associated with said stack ports of said first and second SSEs, respectively, for engaging in a handshake protocol responsive to said acknowledgement.
- The claimed and/or described system, further comprising means, operable upon said stack ports transitioning into an operational mode compatible with said select bandwidth rate, for notifying said select bandwidth rate to stack managers of said first and second SSEs, respectively.
- A stackable Ethernet switch (SES), comprising: a first stack switch element (SSE) having a stack port; a second SSE having a stack port, said first and second SSEs being immediate neighbors such that said first and second SSEs are coupled via a stack link disposed between said stack ports; and means for automatically negotiating said stack link's speed during initialization of said SES, whereby said stack link's speed may be increased to a select bandwidth rate greater than a default rate upon determining that said stack ports of said first and second SSE are capable of supporting said select bandwidth rate.
- The claimed and/or described SES, further comprising means for transitioning said stack ports of said first SSE and said second SSE, respectively, into an operational mode compatible with said select bandwidth rate for transmitting traffic on said stack link disposed therebetween.
- The claimed and/or described SES, further comprising means, operable upon said stack ports transitioning into said operational mode compatible with said select bandwidth rate, for notifying said select bandwidth rate to stack managers of said first and second SSEs, respectively.
- The claimed and/or described computer readable medium, further comprising instructions for notifying said select bandwidth rate to stack managers of said first and second SSEs, respectively, upon said stack ports transitioning into said operational mode compatible with said select bandwidth rate.

It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

## Claims

1. A method for negotiating speed of a stack link ^disposed between a stack port of a first stack switch element (SSE) and a stack port of a second SSE, said first and second SSEs being immediate neighbors in a stackable Ethernet switch (SES) having at least two SSEs, said method comprising:
detecting a link up condition associated with said stack link by said stack port of said first SSE;
upon determining that said stack port of said first SSE is operable at a select bandwidth rate, advertising said select bandwidth rate to said stack port of said second SSE;
upon determining that said stack port of said second SSE is operable at said select bandwidth rate, generating an acknowledgment to said stack port of said first SSE; and
responsive to said acknowledgement, said stack ports of said first SSE and said second SSE transitioning into an operational mode compatible with said select bandwidth rate for transmitting traffic on said stack link disposed therebetween.

2. The method as recited in claim 1, wherein said select bandwidth rate is greater than a default speed associated with said stack link.

3. The method as recited in claim 1, further comprising generating a negative acknowledgement to said stack port of said first SSE if it is determined that said stack port of said second SSE is not operable at said select bandwidth rate.

4. The method as recited in claim 3, further comprising, responsive to said negative acknowledgement, said stack ports of said first and second SSEs transitioning into an operational mode compatible with a default speed associated with said stack link.

5. The method as recited in claim 4, wherein said default speed is lower than said select bandwidth rate.

6. The method as recited in claim 5, wherein said select bandwidth rate comprises 12 Gigabits per second (Gbps) and said default speed comprises 10 Gbps.

7. The method as recited in claim 1, further comprising engaging by said stack ports of said first and second SSEs in a handshake protocol responsive to generating said acknowledgement.

8. A computer readable medium having a set of instructions which, when executed in a processor environment associated with a stackable Ethernet switch (SES), perform the following:
determining that a stack port of a first stack switch element (SSE) of said SES is operable at a select bandwidth rate;
advertising said select bandwidth rate to a stack port of a second SSE of said SES, said first and second SSEs being immediate neighbors such that said first and second SSEs are coupled via a stack link disposed between said stack ports;
determining that said stack port of said second SSE is operable at said select bandwidth rate and generating an acknowledgment to said stack port of said first SSE; and
transitioning, responsive to said acknowledgment, said stack ports of said first SSE and said second SSE, respectively, into an operational mode compatible with said select bandwidth rate for transmitting traffic on said stack link disposed therebetween.

9. The computer readable medium as recited in claim 8, further comprising instructions for generating a negative acknowledgment to said stack port of said first SSE upon determining that said stack port of said second SSE is not operable at said select bandwidth rate.

10. The computer readable medium as recited in claim 9, further comprising instructions for transitioning, responsive to said negative acknowledgment, said stack ports of said first and second SSEs into an operational mode compatible with a default speed associated with said stack link.
